# EUROPÄISCHE PATENTANMELDUNG

(11) **EP 2 028 151 A1**
(43) Veröffentlichungstag der Anmeldung: **25.02.2009**
(21) Anmeldenummer: 08104365.5
(22) Anmeldetag: 11.06.2008
(51) Int. Cl.: B66B 21/10

(54) **Transportsystem zum Überlandtransport von Personen, Gütern und Fahrzeugen**

(30) Priorität: 21.08.2007 DE 202007000030 U
(71) Anmelder: Goetz-Schülling, Ellen, 97522 Sand a. Main (DE)
(72) Erfinder: Goetz-Schülling, Ellen, 97522 Sand a. Main (DE)
(74) Vertreter: Lösch, Christoph Ludwig Klaus

(57) **Zusammenfassung**

Die Erfindung betrifft ein Transportsystem zum Überlandtransport von Personen, Gütern und Fahrzeugen mit mindestens einer Einschleusvorrichtung, mindestens einem Transportmodul und einer Haupteinheit, wobei die Haupteinheit mit einer insbesondere kontinuierlichen Geschwindigkeit bewegt wird, die Einschleusvorrichtung das Transportmodul auf die Geschwindigkeit der Haupteinheit beschleunigt, die Einschleusvorrichtung das Transportmodul anschließend parallel zur Bewegungsrichtung der Haupteinheit führt und hierbei entweder ein Austausch von Personen und/oder Gegenständen zwischen dem Transportmodul und der Haupteinheit oder das Einschleusen des Transportmoduls in die Haupteinheit erfolgt.

## Beschreibung

Die Neuerung betrifft ein Transportsystem zum Überlandtransport von Personen, Gütern und Fahrzeugen.

Momentan wird ein Großteil des Überlandtransports von Personen, Gütern und Fahrzeugen durch den herkömmlichen Straßenverkehr erledigt. Nachteil des momentanen Systems sind die Verkehrsbehinderung durch zu viele Fahrzeuge auf den Straßen und Autobahnen, Kohlenmonoxidausstoß, Ausstoß von Rußpartikeln bei Dieselfahrzeugen, Luftverschmutzung, Unfälle, Landverbrauch durch den Bau zusätzlicher Autobahnen bzw. zusätzlicher Fahrstreifen und ein volkswirtschaftlicher Schaden in Milliardenhöhe aufgrund von Staus und Verkehrsverzögerungen. Zukünftig werden sich diese Probleme aufgrund des zu erwartenden starken Anstiegs des Verkehrsaufkommens, vor allem im Güterverkehr, noch erhöhen.

Ein weiteres bekanntes Transportsystem, insbesondere zum Überlandtransport von Fahrzeugen, ist das Autozugsystem. Bei diesem zieht eine Zugmaschine, insbesondere eine Lok bzw. ein Schienenfahrzeug, mit eigenem Antrieb eine Reihe von Anhängern, auf welche bei Stillstand des Gespannes Fahrzeuge auf- und abfahren können. Nachteil ist, dass der Zug beim Be- und Entladen stehen muss. Dies kostet Zeit, was die Wirtschaftlichkeit des Systems in Frage stellt und die Konkurrenzfähigkeit des Systems im Vergleich zu Schiene und Luftverkehr verringert.

Der Neuerung liegt die Aufgabe zugrunde, ein besonders vielseitiges Transportsystem mit geringem Platzbedarf und geringem Schadstoffausstoß anzubieten.

Diese Aufgabe wird durch ein Transportsystem mit den Merkmalen des Schutzanspruchs 1 gelöst. Vorteilhafte Ausführungsformen des Transportsystems werden in den Unteransprüchen 2 - 6 beschrieben.

Als Führungs- bzw. Laufsysteme auf der sich das Transportmodul und/oder die Haupteinheit bewegen sind verschiedene Varianten einsetzbar. Insbesondere eignen sich ein Schienenstrang, eine Straße, eine Trasse oder ein Beton-Metall-Kunststoffbauteil als Führungs- bzw. Laufsysteme.

Der Antrieb der Haupteinheit und/oder der Einschleusvorrichtung erfolgt vorzugsweise motorisch. Hierbei sind verschiedene Energieträger einsetzbar. Bei der Verwendung von elektrischer Energie als Antriebsenergie können entlang der Transportstrecke, beispielsweise an Schallschutzwänden oder Decken, Sonnenkollektoren angebracht werden, die zusätzliche Energie erzeugen. Außerdem ist ein unterstützend wirkender Hybrid-Antrieb denkbar. Auch ein Bergabbetrieb ohne Energieaufwand ist einsetzbar. Beim Einsatz von Verbrennungsmotoren sind Agrarkraftstoffe als Energiequelle denkbar.

Die Einschleusvorrichtung wird im folgenden auch als Collector bezeichnet.

In einer vorteilhaften Ausführungsform besitzt die Einschleusvorrichtung ein Zugelement, das für die temporäre Verbindung zwischen Transportmodul und Einschleusvorrichtung sorgt. Das Zugelement kann beispielsweise als Metallseil, Stange, Bolzen, gezahntes Antriebselement oder Formteil aus Kunststoff und/oder Metall ausgebildet sein. Auch kann es als Ständerelement ähnlich einem Zugseil bei Skiliften ausgebildet sein, welches von mehreren Motoren in verschiedenen Streckenabschnitten angetrieben wird, die, um geräuscharm zu arbeiten, im Boden versenkt werden können.

Das Zugelement kann im Boden verlegt werden oder in ein auf einer Trasse aufgelegtes Formbauteil aus Beton, Metall oder Kunststoff eingebracht werden. Ebenfalls denkbar ist es, dass das Zugelement von oben, von vorne oder von hinten horizontal auf das zu bewegende Transportmodul einwirkt.

In einer vorteilhaften Ausführungsform ist die Haupteinheit als bewegtes Transportband ähnlich den Koffertransportbändern, die auf allen Flughäfen der Welt anzutreffen sind, ausgebildet. Es kann sich neben der Autobahn, vielleicht auf der Standspur oder daneben durch das Land bewegen. Dabei wird das Band kontinuierlich angetrieben. Eine Abschaltung, auch zu Servicegründen, kann in der Nacht erfolgen, wenn sehr wenig Fahrzeuge unterwegs sind.

Das Transportband kann durch Motoren angetrieben sein, die entlang der Transportstrecke in Gruben im Boden schalldicht eingelassen sind. Die Geschwindigkeit des Transportbandes kann individuell eingestellt werden.

Auf das Transportband können mit Hilfe der Einschleusvorrichtung die Transportmodule eingeschleust werden. Insbesondere können die Transportmodule als Fahrzeuge ausgebildet sein. In besonders vorteilhafter Weise kann das Transportband derart ausgebildet sein, dass die Fahrzeuge huckepack auf das Band abgestellt werden können.

Die Einschleusvorrichtung kann als zweites Band ausgebildet sein, das die Fahrzeuge aufnimmt, beschleunigt und nach erfolgter Einfädelung der Fahrzeuge in das Transportband zu seinem Startpunkt zurückläuft.

Auch kann das Transportband derart ausgebildet sein, dass alle Fahrzeuge, insbesondere PKW, LKW, Omnibusse, Wagen f. d. Personenförderung und Frachtcontainer auf- und abfahren können, wo immer sie wollen. So können großen Strecken im Huckepackverkehr bewältigt werden. Der regionale Verkehr kann ablaufen wie bisher.

Die Kosten können eventuell über das bestehende Mautsystem, oder andere Varianten abgerechnet werden.

Ein derartiges Transportband kann den Verkehr von mehr als 3 Fahrspuren aufnehmen. Dadurch ist eine deutliche Reduzierung des Landverzehrs für den Straßenbau möglich.

In vorteilhafter Weise verläuft das Transportband auf einem Fahrstreifen bzw. auf der Standspur bestehender Autobahnen.

Wird der Schwerlastverkehr auf das Transportband verlagert, verlängert sich der Instandhaltungszyklus für die Straßenbeläge der Autobahn.

Außerdem entfallen die lästigen Überholvorgänge der LKWs die jeden Autofahrer ärgern, da sich diese oft über Kilometer hinziehen und Stauverursacher sind.

Natürlich kann dieses bewegte Transportband auch auf einer beliebigen Trasse erstellt werden, oder an jede Straße angegliedert werden.

Es ist denkbar, dass die Fahrzeuge an einer Auffahrrampe des Collectors auf ein Trägermodul auffahren, welches dann das Fahrzeug, nachdem es huckepack auf die gleiche Geschwindigkeit wie das bewegte Band gebracht wurde, mittels eines elektrischen Einschleusungssystems in den Verkehrsfluß /Zugsystem des bewegten Bandes einschleust. Der Fahrweg bzw. der Untergrund kann aus zeitüblichem Fahrwegebelag z. B. Asphalt, Beton oder Abwandlungen von diesen hergestellt werden, in/auf welchen das Zugelement eingelassen bzw. aufgebracht ist.

Auch kann ein Formteil aus Beton, Metall oder Kunststoff auf eine Trasse oder Straße aufgelegt werden, in der das Zugelement ein- bzw. aufgebracht wird.

Die Fahrzeuge fahren entweder selbstrollend oder werden durch ein Trägermodul, auf das sie am Collectorstartplatz aufgefahren worden sind, transportiert. Dieses Trägermodul kann sich dann seinerseits auf Rädern oder Rollen auf dem Fahrwegebelag bzw. Schienen bewegen.

Die Fahrzeuge oder Trägermodule werden am Collectorstart z. B. an einen Abschlepphaken oder an andere Einrastvorrichtungen arretiert und durch diese Abschleppvorrichtung geführt.

Die Funktionsweise von Weichen zum Ein- und Ausschleusen ist bekannt und kann aus der Schienentechnik / Eisenbahn übernommen werden.

Der Fahrer eines Fahrzeuges oder Angestellte der Betreiberfirma kann mittels eines elektrischen Eingabegerätes entweder schon vor Einfahrt oder während der Fahrt den Befehl zur gewünschten Ausfahrt vom bewegten Band geben. Jede Ein- und Ausfahrt hat eine Identifikationsnummer.

Der Collector hat die Aufgabe an Auf- und Abfahrten Fahrzeuge in das bewegte Transportband mittels elektrischer Steuerung, in eine vorhandene Lücke des bewegten Bandes ein- und auszuschleusen.

Dazu bedarf es an Ein- und Ausfahrten beispielsweise einer zweiten Trasse von einigen Kilometern Länge. Auf dieser zweiten Trasse fahren die einfahrwilligen Fahrzeuge auf. Die Trasse kann auch ein Gefälle aufweisen. Dies führt zu einer Ersparnis von Anlaufenergie.

Die Fahrzeuge auf dem Collector nehmen die gleiche Geschwindigkeit auf, die das vorbeifahrende bewegte Band aufweist. Die Elektronik bzw. EDV des Collectors hat schon einige Minuten vorher erkannt, wann eine Einfahrlücke des bewegten Bandes den Collector passiert und schickt das/die einfahrwilligen Fahrzeuge, das/die sich auf dem Collector abfahrbereit gemacht haben, los.

Die Steuerungselektronik des bewegten Bandes kann so programmiert sein, dass eventl. Lücken verursacht durch ausfahrendes transportiertes Gut/Personen, durch abfallen od. ansteigen der Geschwindigkeit des bewegten Bandes od. der huckepack beförderten Last welche auf den Auffahrmodulen steht, aufschließen od. abfallen um Lücken zu schließen oder neue aufzutun.

Über eine Weiche werden das/die einfahrwilligen Fahrzeuge auf das bewegte Band gesteuert bzw. gelotst.

Bei einer gewünschten Ausfahrt, passiert der Vorgang auf umgekehrte Weise.

Die Ausfahrtrasse kann auch energie- bzw. antriebslos bedient werden, da die ausfahrenden Fahrzeuge einfach ausrollen und das Auffahrmodul antriebslos ausrollt.

Die Trasse des Collectors können beispielsweise eine Straße, Rampe oder Beton-Metall-Kunststofffertigteilelemente sein, falls die Fahrzeuge selbstrollend, gezogen, geschoben oder huckepack funktionieren. Auch sind als Trasse ein Schienenstrang bzw. Geleise einsetzbar.

In einer weiteren vorteilhaften Ausführungsform ist die Haupteinheit als herkömmlicher, an sich bekannter Zug ausgebildet. Dadurch wird es möglich, dass Züge, insbesondere Fernverkehrszüge nicht mehr in den Bahnhöfen halten müssen. Sie übergeben stattdessen schon einige Kilometer vor dem Bahnhof die Fahrgäste oder Waren an das parallel vorbeifahrenden Transportmodul. Der Zug fährt dabei nebenher mit gleicher Geschwindigkeit.

Vorteilhafterweise können dabei Sicherheitstüren vorhanden sein. Diese ermöglichen einen gefahrlosen Übertritt vom Zug in das Transportmodul.

Der Übertritt kann dabei wie folgt vor sich gehen: Bevor der erste Fahrgast den Zug bzw. das Transportmodul verlassen kann, schließen sich im Innenraum des Zuges bzw. des Transportmoduls Sicherheitstüren oder Rollläden. Jetzt od. später öffnen sich die Sicherheitstüren. Dann öffnen sich die Außentüren. Ein ausfahrbarer Steg, ähnlich den Flugsteigen, die ein Flugzeug mit dem Abfertigungsterminal verbinden, verbindet den Zug mit dem Transportmodul. Anschließend öffnen sich die innenliegenden Sicherheitstüren, die Fahrgäste wechseln in das gewünschte Zugsystem über, werden in den Zielbahnhof gefahren, während der Fernverkehrszug mit großer Geschwindigkeit die nächste Destination ansteuert. Dadurch kann eine große Fahrtzeitersparnis erreicht werden, was zu einem Wettbewerbsvorteil gegenüber dem Luftverkehr führt.

Zum Zustieg von Passagieren aus dem Transportmodul in den Zug besteigen diese in ihrem Abfahrtsbahnhof das Transportmodul, anschließend wird dieses bis auf die Geschwindigkeit des Zuges beschleunigt und auf dem parallel zum Fernverkehrsgleis verlaufenden Collector-Gleis geführt. Befinden sich Transportmodul und Zug auf gleicher Höhe, kann der oben beschriebene Übertritt der Passagiere erfolgen.

Auch kann das Transportsystem mit einer Führungseinheit ausgestattet sein. Hierbei wird das Transportmodul/Fahrzeug, auf dem Collector bereitgestellt und zum gewünschten Zeitpunkt wird das Transportmodul/Fahrzeug beschleunigt.

Kurz vor dem Einschleuspunkt fährt das Transportmodul mit einem seitlich am Transportmodul angebrachten U-Profil in ein beispielsweise an der Abgrenzungswand der Anlage angebrachtes U-Profil ein. Das U-Profil von oben greift in das U-Profil von unten, ,sodass sich die beiden U-Profile ineinander verzahnen und eine Führungseinheit bilden. Dies führt zu einem Halte- und Führungseffekt.

Das U-Profil führt das Transportmodul solange bis das Transportmodul auf dem bewegten Band, d.h. auf der Haupteinheit, sicher eingerastet ist. Ob eine seitliche Führung dann noch nötig ist, geben die baulichen Notwendigkeiten vor. Andernfalls entfällt das U-Profil an der seitlichen Abgrenzungswand, sodass das U-Profil das seitlich am Transportmodul angebracht ist, wieder freiläuft und damit die Haltefunktion verliert.

Als weitere Führungseinheit des Transportmoduls für den Einschleussvorgang an einer Ein-Ausschleusweiche kann ein Führungsschacht dienen. Dieser kann z.B. mittig unter dem Transportmodul längs laufend im Boden eingelassen sein.

In diesem Schacht kann auch die Antriebseinheit, beispielsweise das Lochband, die Kette, das Seil oder das Carreband, untergebracht sein, welches das Transportmodul zieht.

Kurz vor dem Einschleuspunkt, beispielsweise 1-2 m davor, endet der Antrieb. Beispielsweise fährt das Lochband usw, nach seitlich unten weg. Das Transportmodul fährt die erforderliche Strecke, bis das Lochband der Haupteinheit, d.h. beispielsweise das bewegte Band, das Transportmodul wieder mit seinem Mitnehmerbolzen usw. erfasst, antriebslos.

Bei einer möglichen Einschleusgeschwindigkeit von 100 Std/km beträgt die antriebslose Einschleuszeit 4/10 sek. auf etwa 10 Meter. In dieser Zeit ist ein Abfallen der Reisegeschwindigkeit des Transportmoduls nur, wenn überhaupt, unmerklich zu beobachten.

Unter dem Transportmodul können zwei nach unten in den Mittelschacht greifende Metall/Kunststoffzungen aus hart geformten Material links und rechts an der Wand des Mittelkanals entlang fahren. Dadurch wird eine zweite Führung während des Ein-/ Ausschleusvorgangs sichergestellt.

Diese Führung durch die beiden Zungen unter dem Transportmodul gewährleisten auch die Führung auf der Haupteinheit, neben der Führung durch das Zugelement (z.B. Lochband, Kette, Carreband, usw). Hiermit ist ein Ausbrechen des gezogenen Transportmoduls unmöglich, da es zweifach gesichert ist. Dies wiederum vermindert die Unfallgefahr.

Des Weiteren kann das Transportsystem mindestens ein drehbares Lagerelement aufweist, welches durch die Haupteinheit, die Einschleusvorrichtung und/oder das Transportmodul in Drehbewegung versetzt werden kann und welches als Generator zur Erzeugung von elektrischer Energie ausgebildet ist.

Das Antriebsband, übernimmt hierbei ausschließlich die Funktion des Vortriebes, d. h. es liegt keine Stützlast von oben auf dem Band. Dies wird durch das Transportmodul, welches auf der ausgewiesenen Trasse fährt, die deshalb die Last der Fracht trägt, abgefangen.

Damit das Band bzw. die Kette usw. ohne Widerstand nach vorne bewegt werden kann, liegt diese auf Lagern, Kugellager oder ist gelagert. Diese Lager gewährleisten einen ungehinderten Bewegungsablauf des Bandes.

Daneben können diese Lager bzw. Kugellager eine weitere Funktion übernehmen. Nämlich die der Stromerzeugung, als Generator. Dabei können diese einzeln oder gebündelt wirken. Ähnlich einem Fahrrad-Dynamo dient die Drehbewegung der Stromerzeugung.

Auch kann beim Ausschleusen der Transportmodule von der Haupteinheit die Abbremsenergie des Bandes zur Energieerzeugung genutzt werden. Damit kommt die Fracht schneller zum Stehen.

Der gleiche Effekt kann im Bergabbetrieb der Haupteinheit genutzt werden. Durch konsequente Nutzung der abfallenden Energie der Anlage kann eine Energieersparnis von 20% erreicht werden.

## Patentansprüche

1. Transportsystem zum Überlandtransport von Personen, Gütern und Fahrzeugen mit
- mindestens einer Einschleusvorrichtung
- mindestens einem Transportmodul und
- einer Haupteinheit,
wobei
- die Haupteinheit mit einer insbesondere kontinuierlichen Geschwindigkeit bewegt wird,
- die Einschleusvorrichtung das Transportmodul auf die Geschwindigkeit der Haupteinheit beschleunigt,
- die Einschleusvorrichtung das Transportmodul anschließend parallel zur Bewegungsrichtung der Haupteinheit führt und
- hierbei entweder ein Austausch von Personen und/oder Gegenständen zwischen dem Transportmodul und der Haupteinheit oder das Einschleusen des Transportmoduls in die Haupteinheit erfolgt.

2. Transportsystem nach Anspruch 1, wobei die Einschleusvorrichtung ein Zugelement aufweist, welches lösbar mit dem Transportmodul verbindbar ist.

3. Transportsystem nach einem der vorhergehenden Ansprüche, wobei die Einschleusvorrichtung ein sich mit der Geschwindigkeit der Haupteinheit bewegendes Transportmodul abbremst.

4. Transportsystem nach einem der vorhergehenden Ansprüche, wobei die Haupteinheit als Transportband und das Transportmodul als Fahrzeug ausgebildet ist und das Fahrzeug durch die Einschleusvorrichtung auf einen freien Bereich des Transportbandes eingestellt wird.

5. Transportsystem nach Anspruch 4, wobei das Transportband durch Motoren angetrieben wird und auf bestehenden Verkehrstrassen, insbesondere auf Autobahnen oder Schnellstraßen, verläuft.

6. Transportsystem nach einem der Ansprüche 1 - 5, wobei die Haupteinheit als Zug ausgebildet ist und das Transportmodul sich auf einer Schienentrasse bewegt.

7. Transportsystem nach einem der vorhergehenden Ansprüche, wobei das Transportmodul eine Führungseinheit, insbesondere eine während des Einschleusens des Transportmoduls in die Haupteinheit mit einem korrespondierenden Führungselement der Einschleusvorrichtung in Verbindung stehende Führungseinheit, aufweist.

8. Transportsystem nach einem der vorhergehenden Ansprüche, wobei das Transportsystem mindestens ein drehbares Lagerelement aufweist, welches durch die Haupteinheit, die Einschleusvorrichtung und/oder das Transportmodul in Drehbewegung versetzt werden kann und welches als Generator zur Erzeugung von elektrischer Energie ausgebildet ist.
